# EUROPEAN PATENT SPECIFICATION

(11) **EP 2 087 961 B1**
(45) Date of publication and mention of the grant of the patent: **25.07.2012**
(21) Application number: 09250040.4
(22) Date of filing: 08.01.2009
(51) Int. Cl.: B23K 3/047, B23K 1/00, B23K 1/002, B23P 6/00, F01D 5/00, B23K 101/00

(54) **System and method for restoring a metal turbine blade or vane**
System und Verfahren zur Wiederherstellung von einer metallischen Turbinenschaufel oder einem metallischen Turbinenflügel
Système et procédé pour la restauration d'une pale ou ailette de turbine métallique

(30) Priority: 24.03.2008 US 79022; 10.01.2008 SG 200800233
(43) Date of publication of application: 12.08.2009
(73) Proprietor: Turbine Overhaul Services Private Limited, Singapore 638639 (SG)
(72) Inventor: Lee, Glenn Hong Guan, 650410 Singapore (SG); Na, Wee Kwong, Singapore (SG); Jek, Kin Keong, Chestervale, 679973 Singapore (SG); Rao, Garimella Balaji, 669556 Singapore (SG)
(74) Representative: Leckey, David Herbert

(56) References cited:
- EP-A- 0 870 566
- EP-A- 1 561 536
- US-A1- 2005 274 009

## Description

The present invention relates to systems and methods for restoring a metal turbine blade or vane.

Single crystal alloys are typically employed in gas turbine engine components due to the high mechanical strengths and creep resistances obtained with such alloys. Because gas turbine engine components are exposed to extreme temperatures and pressures, high mechanical strengths and creep resistances are required to preserve the integrity of the engine over the course of operation. However, over time, exposed portions of the components are subject to wear arid other degradations, which can lead to decreases in operational efficiencies.

Due to economic factors, it is common practice in the aerospace industry to restore turbine engine components rather than replace them. Such restorations desirably restore damaged regions of the engine components to their original dimensions. Turbine engine components are typically restored with brazing operations, which subject the single crystal alloys of the engine components to high temperatures (e.g., 1200°C/2200°F) for extended durations (e.g., 10 hours). Exposure to the high temperatures for the extended durations, however, reduces the low-temperature creep resistances of the single crystal alloys. Additionally, the restored portions of engine components restored with standard brazing operations typically have polycrystalline microstructures, which have lower mechanical strengths and creep resistances compared to the microstructures of single crystal alloys. Accordingly, there is a need for systems and techniques for restoring metal turbine blades or vanes (e.g., turbine engine components) that are capable of creating restored portions with directionally-solidified microstructures.

EP-A-0,870-566 discloses a method of brazing directionally solidified or monocrystalline components. US-2005/0274009-A describes a braze repair of shroud block seal teeth in a gas turbine engine. EP-A-1,561,536 discloses a repair soldering method for repairing a component which comprises a base material with an oriented microstructure.

According to a first aspect of the present invention, there is provided a system for restoring a metal turbine blade or vane as claimed in claim 1. According to a second aspect of the present invention, there is provided a method as claimed in claim 10.

### BRIEF DESCRIPTION OF THE DRAWINGS

FIG. 1 is a front perspective view of an induction heating system for restoring metal components.
FIG. 2 is an exploded side view of the induction heating system.
FIG. 3 is a side view of the induction heating system disposed in an elevated position.
FIG. 4 is a side view of the induction heating system disposed in a lowered position.
FIG. 5 is a sectional view of a heat exchanger assembly of the induction heating system in use with a radiation insulator containing a turbine blade.
FIG. 6 is a side view of an alternative induction heating system disposed in a lowered position.

### DETAILED DESCRIPTION

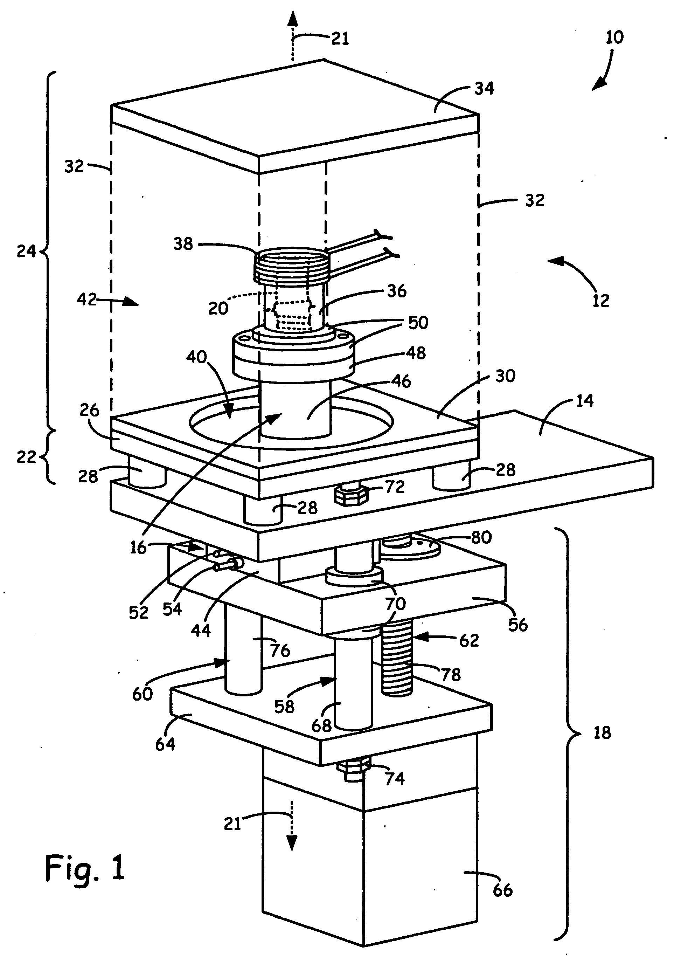

FIG. 1 is a front perspective view of system 10, which is an induction heating system for restoring metal components (e.g., turbine engine blades and vanes) with an induction brazing process. As shown, system 10 includes induction chamber 12, support plate 14, heat exchanger assembly 16, and motion assembly 18, where induction chamber 12 contains a damaged turbine blade that requires restoration (referred to as blade 20, and shown with hidden lines). As discussed below, system 10 is configured to create a near-linear thermal gradient along a longitudinal axis of blade 20 (referred to as longitudinal axis 21) and to move blade 20 at a suitable rate along longitudinal axis 21. This increases the ability to obtain a directionally-solidified microstructure for the restored tip of blade 20, where the directionally-solidified microstructure obtained is desirably similar to a single crystal microstructure. As used herein, the term "along" with reference to an axis (e.g., longitudinal axis 21) refers to an orientation that is substantially coaxial with, or substantially parallel to, the axis. For example, moving blade 20 along longitudinal axis 21 refers to the movement of blade 20 in a direction that is substantially coaxial with, or substantially parallel to, longitudinal axis 21.

Induction chamber 12 is an enclosable chamber that includes base portion 22 and cover portion 24. Base portion 22 of induction chamber 12 includes bottom platform 26 and chamber insulators 28, where bottom platform 26 is a platform that functions as a floor of induction chamber 12, and is removably securable to cover portion 24. This allows induction chamber 12 to be opened for access within cover portion 24 (by removing cover portion 24 from bottom platform 26), and closed (by securing cover portion 24 to bottom platform 26).

Chamber insulators 28 are standoff extensions secured between support plate 14 and bottom platform 26 that reduce the amount of conductive heat that transfers from induction chamber 12 to support plate 14. Support plate 14 retains moving components (e.g., motion assembly 18), which may be negatively affected by transferred conductive heat. Thus, chamber insulators 28 reduce the risk of subjecting such components to the heat produced by induction chamber 12. Examples of suitable materials for chamber insulators include polymeric materials having low thermal conductivities, such as fluoropolymers commercially available under the trademark "TEFLON" from E.I. du Pont de Nemours and Company, Wilmington, DE.

Cover portion 24 of induction chamber 12 includes chamber floor 30, chamber wall 32, chamber ceiling 34, radiation insulator 36, and induction coil 38. Chamber floor 30 and chamber ceiling 34 are the floor and ceiling components of cover portion 24, respectively. Chamber floor 30 is also the part of cover portion 24 that is removably securable to bottom platform 26 for opening and closing induction chamber 12. As shown, chamber floor 30 includes opening 40, which is a hole through chamber floor 30 that allows heat exchanger assembly 16 and radiation insulator 36 to be inserted within cover portion 24 prior to the induction heating process.

Chamber wall 32 is a lateral wall of cover portion 24, and is shown with broken lines in FIG. 1 for ease of discussion of the components located within induction chamber 12. Chamber wall 32 is desirably derived from one or more materials that provide structural support and restrict the emission of thermal radiation from induction chamber 12 (e.g., stainless steel). Chamber wall 32 defines interior region 42, which is the interior volume of cover portion 24, and extends from chamber floor 30 to chamber ceiling 34. In alternative embodiments, cover portion 24 may include additional walls and/or radiation shields to further reduce the emission of thermal radiation from induction chamber 12. For example, cover portion 24 may include an annular wall that is aligned with the perimeter of opening 40, thereby reducing the volume of interior region 42.

When chamber floor 30 is secured to bottom platform 26, interior region 42 of induction chamber 12 is desirably sealed off from the external environment, thereby allowing interior region 42 to contain one or more inert gases (e.g., argon), or to exhibit a reduced-pressure atmosphere or vacuum. Maintaining interior region 42 under a vacuum is particularly desirable because the vacuum reduces convective heat transfers within interior region 42. Convective heat transfer may increase the amount of lateral heating that blade 20 is subjected to, which can result in dislocation densities in the directionally-solidified microstructure. Thus, a reduction in the convective heat transfer is beneficial to obtain a near-linear thermal gradient along blade 20, which promotes directional solidification of a brazing alloy (not shown in FIG. 1). Examples of suitable vacuum pressures for performing the induction brazing process include about 13 millipascals (about 10⁻⁴ Torr) or less, with more particularly suitable pressures including about 1.3 millipascals (about 10⁻⁵ Torr) or less.

Radiation insulator 36 is a cylindrical component that encases blade 20 during the induction brazing process, and functions as a radiation shield for blade 20. Radiation heat transfer may occur whenever there is a temperature variation (e.g., between blade 20 and interior region 42), regardless of whether interior region 42 is maintained under a vacuum. As such, radiation insulator 36 reduces the amount of radiation-based heat that emits from blade 20 during an induction brazing process, which also promotes directional solidification of the brazing alloy. Suitable materials for radiation insulator 36 include materials having low electrical conductivities and that desirably reduce the emission of thermal radiation from a metal component during an induction brazing process. Examples of suitable materials for radiation insulator 36 include graphite-based materials (e.g., porous graphite). In the embodiment shown in FIG. 1, radiation insulator 36 also functions as a mold block for the brazing alloy, which shapes the restored tip of blade 20 during the induction brazing process. Alternatively, system 10 may also include a separate mold block insert (not shown) that is positionable within radiation insulator 36 for shaping the restored tip of blade 20.

Induction coil 38 is an electrically-conductive tubing that is disposed within interior region 42, and extends through chamber wall 32 for connection to an electrical current source (not shown) disposed outside of induction chamber 12. As discussed below, induction coil 38 provides localized heating to blade 20 and the brazing alloy disposed within radiation insulator 36. This allows the damaged portion of the blade 20 to be repaired via induction heating. As shown, induction coil 38 extends around a portion of radiation insulator 36 in a helical geometry. This arrangement desirably minimizes the distance between radiation insulator 36 and induction coil 38, while also allowing blade 20 and radiation insulator 36 to move along longitudinal axis 21. Induction coil 38 is desirably formed from one or more metallic materials that are electrically and thermally conductive (e.g., copper). Suitable tubing diameters for induction coil 38 include diameters ranging from about 3 millimeters to about 5 millimeters.

Support plate 14 is a rigid plate securable to a structural mount (e.g., a work bench, not shown) for supporting system 10 in a cantilevered manner. In alternative embodiments, support plate 14 may be replaced with different types of horizontal support structures configured to retain and support system 10.

Heat exchanger assembly 16 is a cooling assembly configured to maintain a thermal gradient along the longitudinal length of blade 20 (i.e., along longitudinal axis 21) during the induction brazing process. This promotes the directional solidification of the brazing alloy, which correspondingly increases the ability to obtain a directionally-solidified microstructure. Heat exchanger assembly 16 includes coupling manifold 44, coolant tube 46, chill block holder 48, and chill block 50, where coupling manifold 44 is disposed below support plate 14 and is secured to coolant tube 46. Coupling manifold 44 includes inlet port 52 and outlet port 54, which are fluid conduits configured to couple with inlet and outlet coolant water lines of an external refrigeration system (not shown). Coolant tube 46 is a fluid conduit that extends through bottom platform 26 and opening 40, and interconnects coupling manifold 44 and chill block holder 48. As discussed below, coolant tube 46 includes multiple annular channels (not shown in FIG. 1) that allow the coolant fluid to flow between coupling manifold 44 and chill block holder 48.

Chill block holder 48 is a first thermally-conductive component secured to the opposing end of coolant tube 46 from coupling manifold 44, and provides a mounting surface for securing chill block 50. Chill block 50 is a second thermally-conductive component removably secured to chill block holder 48, and is configured to receive and retain radiation insulator 36. Because chill block 50 is removably securable to chill block holder 48, multiple insulator mounts may be interchangeably secured to chill block holder 48, thereby allowing metal components (e.g., blade 20) and radiation insulators 36 with a variety of different designs to be secured within induction chamber 12. This allows system 10 to be used to restore a variety of different metal components.

When radiation insulator 36 is mounted on chill block 50, the base of blade 20 is desirably in thermally-conductive contact with chill block 50 to conductively transfer heat from blade 20 during the induction brazing process. This creates the thermal gradient along blade 20, which promotes the directional solidification of the brazing alloy along longitudinal axis 21. Accordingly, chill block holder 48 and chill block 50 are desirably formed from one or more thermally-conductive materials to increase the heat transfer between blade 20 and chill block 50. Suitable materials for chill block holder 48 and chill block 50 include thermally-conductive metallic materials (e.g., copper), and chill block 50 may also be coated with one or more materials (e.g., plated nickel) to prevent contamination between the thermally-conductive material of chill block 50 and the base alloy of blade 20. The thermal gradient extends along longitudinal axis 21 because of the relative locations of induction coil 38 and chill block 50. As shown, the source of heat (i.e., induction coil 38) and the source of cooling (i.e., chill block 50) are offset from each other along longitudinal axis 21. Accordingly, heat transfer mechanics cause the thermal gradient in blade 20 to form along longitudinal axis 21.

Motion assembly 18 is a threaded-screw drive mechanism configured to move blade 20 and radiation insulator 36 along longitudinal axis 21 relative to induction coil 38. Motion assembly 18 includes slide plate 56, linear bearing assemblies 58 and 60, threaded shaft assembly 62, end plate 64, and motor 66. As shown, the arrangement of motion assembly 18 positions motor 66 at an offset location relative to longitudinal axis 21. This reduces any potential interferences of magnetic flux between induction coil 38 and motor 66, and also prevents coolant fluid from inlet port 52 and outlet port 54 of coupling manifold 44 from accidentally dripping on to motor 66.

Slide plate 56 is a first plate for supporting coupling manifold 44. As discussed below, slide plate 56 is retained by linear bearing assemblies 58 and 60, and is engaged with threaded shaft assembly 62 for movement along longitudinal axis 21. Linear bearing assemblies 58 and 60 are linear guides that restrict the movement of slide plate 56 to upward and downward directions along longitudinal axis 21. Linear bearing assembly 58 includes pillar shaft 68 and linear bushing 70, where pillar shaft 68 has a first end secured to support plate 14 with retention nuts 72, and a second end secured to end plate 64 with retention nuts 74. Linear bushing 70 extends through slide plate 56, and provides a shaft for pillar shaft 68 to slide through. Linear bearing assembly 60 includes pillar shaft 76, which has a first end secured to support plate 14 (with retention nuts, not shown), and a second end secured to end plate 64 (with retention nuts, not shown). Linear bearing assembly 60 also includes a linear bushing (not shown) that functions in the same manner as linear bushing 70. Thus, linear bearing assemblies 58 and 60 restrict the movement of slide plate 56 to directions along longitudinal axis 21.

Threaded shaft assembly 62 includes threaded screw 78 and screw nut 80, where threaded screw 78 has a first end secured to support plate 14 and a second end that extends through end plate 64 and engages with motor 66. Screw nut 80 extends through slide plate 56 and is threadedly engaged with threaded screw 78, thereby allowing the rotation of threaded screw 78 to move slide plate 56 upward and downward along longitudinal axis 21. End plate 64 is a second plate supported by pillar shafts 68 and 76, and provides a support surface for mounting motor 66. Motor 66 is an electrical motor (e.g., a stepper motor) configured to apply rotational power to threaded screw 78 during the induction brazing process to move blade 20 downward along longitudinal axis 21 relative to induction coil 38. As discussed below, the downward motion of blade 20 allows successive portions of the brazing alloy to melt via induction heating, thereby forming the restored tip of blade 20.

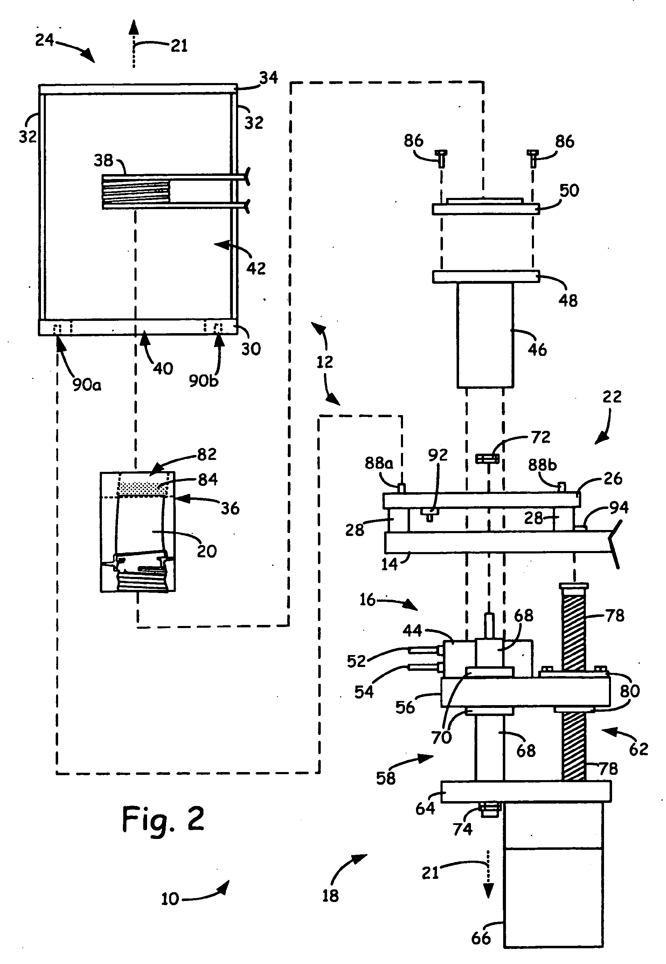

FIG. 2 is an exploded side view of system 10, further illustrating the components of system 10. As shown, radiation insulator 36 includes mold cavity 82, which is a cavity that conforms to the desired dimensions of the restored tip of blade 20. Prior to performing the induction brazing process, blade 20 is inserted within radiation insulator 36, and mold cavity 82 is at least partially filled with brazing alloy 84. Brazing alloy 84 is desirably provided as a powder having nanosize and/or microsize particles. Examples of suitable materials for brazing alloy 84 include alloys containing nickel and/or cobalt, and may also include one or more additional metals such as titanium, chromium, niobium, hafnium, tantalum, molybdenum, tungsten, aluminum, and iron. Particularly suitable alloys for the nanoparticle alloy include nickel-based alloys, nickel-based superalloys, cobalt-based alloys, cobalt-based superalloys, and combinations thereof. The composition of brazing alloy 84 desirably maintains a nickel concentration within the limit of the base alloy of blade 20. Examples of suitable materials for blade 20 include single crystal alloys based on nickel, cobalt, and combinations thereof (e.g., PWA 1480 and PWA 1484 alloys).

As further shown, chill block 50 is removably securable to chill block holder 48 with screws 86, thereby allowing chill block 50 to be interchanged with chill blocks having different designs. When chill block 50 is secured to chill block holder 48 with screws 86, radiation insulator 36 (containing blade 20 and brazing alloy 84) may then be mounted on chill block 50 such that blade 20 is in thermally-conductive contact with chill block 50. Cover portion 24 of induction chamber 12 may then be secured to bottom platform 26 with the use of alignment pins 88a and 88b, and alignment slots 90a and 90b. Alignment pins 88a and 88b are pins extending upward from bottom platform 26, and alignment slots 90a and 90b are slots within chamber floor 30 that line up with alignment pins 88a and 88b, respectively. This allows cover portion 24 to be secured to bottom platform 26 during the induction brazing process.

As discussed above, when chamber floor 30 is secured to bottom platform 26, interior region 42 of induction chamber 12 is desirably sealed off from the external environment, thereby allowing interior region 42 to contain one or more inert gases, or to exhibit a reduced-pressure atmosphere or vacuum. As such, system 10 also includes gas port 92, which extends through bottom platform 26 to allow access to interior region 42. In the embodiments in which interior region 42 is filled with an inert gas, gas port 92 may be coupled to a pressurized gas source (not shown) to allow the inert gas to fill interior region 42. Alternatively, in the embodiments in which interior region 42 exhibits a reduced-pressure atmosphere or vacuum, gas port 92 may be coupled to a pump assembly (not shown) to remove a portion or all of the gases within interior region 42.

As further shown in FIG. 2, threaded shaft assembly 62 also includes retention nut 94, which is located above support plate 14, and aligned with threaded screw 78. During the assembly of system 10, the first end of threaded screw 78 is inserted through support plate 14, and is secured to support plate 14 with retention nut 94. This allows threaded shaft assembly 62 to move slide plate 56 along longitudinal axis 21.

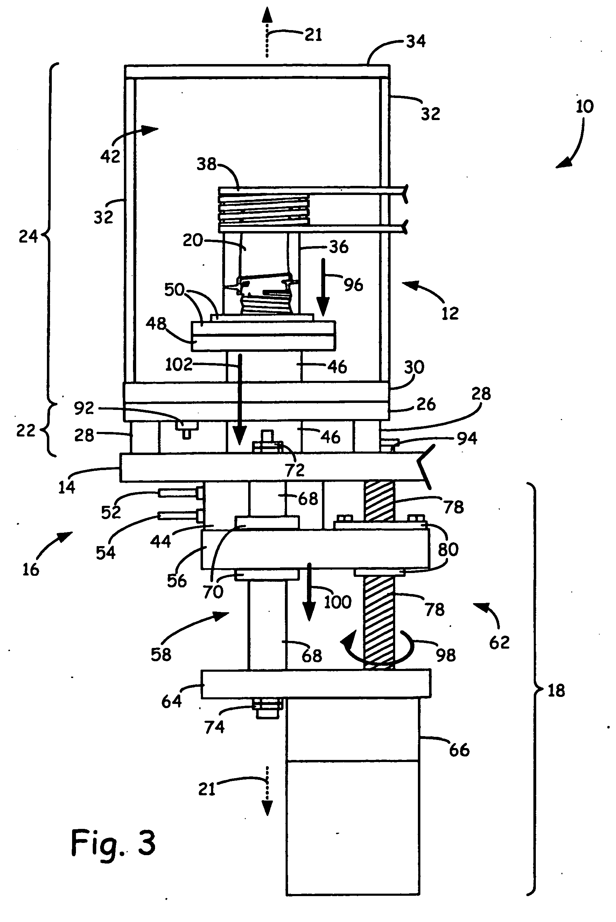

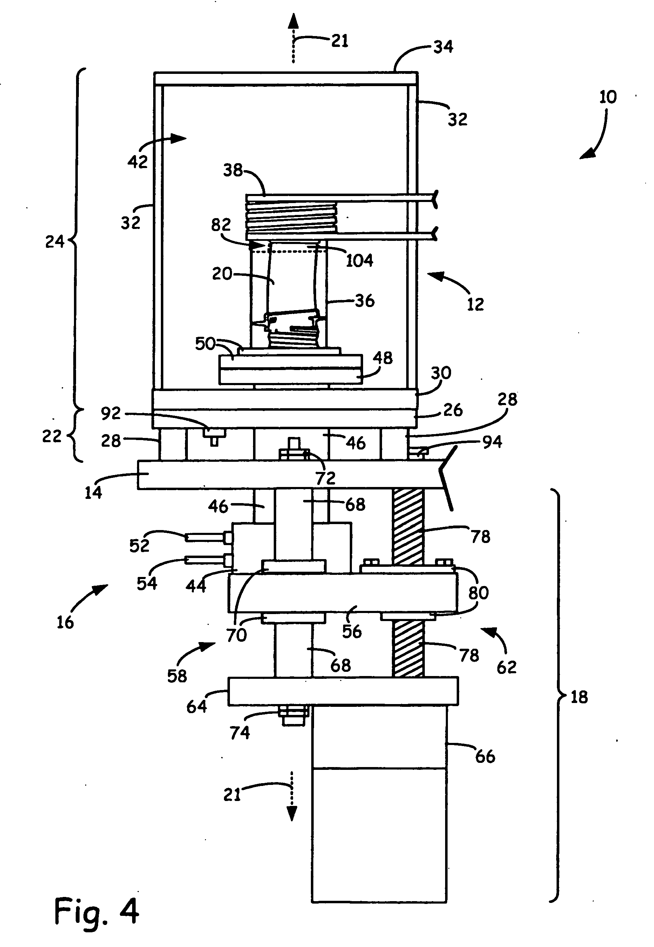

FIGS. 3 and 4 are side views of system 10 during an induction brazing process. As shown in FIG. 3, system 10 is disposed in an elevated position such that a portion of blade 20 and a portion of radiation insulator 36 extend within induction coil 38. Prior to the induction brazing process, blade 20 is inserted within radiation insulator 36, and brazing alloy 84 (shown in FIG. 2) is deposited in mold cavity 82 of radiation insulator 36 (shown in FIG. 2). Radiation insulator 36 is then mounted on chill block 50 such that the base of blade 20 contacts chill block 50. Interior region 42 of induction chamber 12 is then desirably purged of gases to create a vacuum condition (or, alternatively, filled with one or more inert gases) via gas line 92. Coolant fluid is then introduced to heat exchanger assembly 16 via inlet port 52, thereby cooling chill block 50. This correspondingly cools blade 20 due to the conductive contact between blade 20 and chill block 50.

An electrical current is then introduced to induction coil 38, thereby heating the tip of blade 20 and brazing alloy 84. The electrical current applied to induction coil 38 creates a magnetic field in the region within the helical geometry of induction coils 38. Because the tip of blade 20 and a portion of the brazing alloy are located within this region, the magnetic field induces eddy currents within the tip of blade 20 and the brazing alloy, thereby generating localized heat in a non-contact manner. The induction heating of the tip of blade 20 and the cooling of the base of blade 20 (via chill block 50) forms a thermal gradient along blade 20 in the direction of longitudinal axis 21. As discussed above, the vacuum condition of interior region 42 reduces the amount of convective heat transfers, and radiation insulator 36 reduces the amount of thermal radiation emitted from blade 20. As such, the thermal gradient is a near-linear thermal gradient, which increases the ability to obtain a directionally-solidified microstructure. While the near-linear thermal gradient is maintained, the induction heating melts the portion of brazing alloy 84 located at the localized region within the helical geometry of induction coil 38. This allows the brazing alloy 84 to fuse with the tip of blade 20 with reduced dislocation densities in the resulting crystal microstructure, thereby promoting directional solidification of the fused brazing alloy 84.

Suitable brazing temperatures for the induction brazing process may vary depending on the alloys used for blade 20 and brazing alloy 84. Examples of suitable brazing temperatures for the induction brazing process range from about 1100°C to about 1400°C, with particularly suitable brazing temperatures ranging from about 1200°C to about 1300°C, where the brazing temperature is the temperature of the tip of blade 20 and brazing alloy 84 at the localized heating region within induction coil 38. As discussed below, the brazing temperature may be indirectly measured by the thermal effects on the coolant fluid flowing through heat exchanger assembly 16.

To further promote directional solidification of brazing alloy 84, motion assembly 18 moves blade 20 and radiation insulator 36 downward along longitudinal axis 21 (represented by arrow 96) at a rate that substantially corresponds to the growth rate of the fused brazing alloy 84. Suitable movement rates may vary depending on several factors, such as the compositions of brazing alloy 84 and the base alloy of blade 20, the volume of the restored tip of blade 20, and the characteristics of the thermal gradient along blade 20. Examples of suitable movement rates along longitudinal axis 21 range from about 0.01 millimeters/minute to about 50 millimeters/minute, with particularly suitable movement rates ranging from about 10 millimeters/minute to about 30 millimeters/minute.

As discussed above, motion assembly 18 moves blade 20 and radiation insulator 36 downward along longitudinal axis 21 with motor 66. Motor 66 applies rotational power to threaded screw 78, which causes threaded screw 78 to rotate in a first rotational direction (represented by arrow 98). The threaded engagement between threaded screw 78 and screw nut 80 causes slide plate 56 to move downward, where linear bearing assembly 58 and linear bearing assembly 60 (shown in FIG. 1) restrict the downward movement of slide plate 56 to a linear direction along longitudinal axis 21 (represented by arrow 100). In an alternative embodiment, threaded screw 78 and screw nut 80 are configured to move slide plate 56 downward when threaded screw 78 is rotated in an opposite rotational direction from the rotation direction of arrow 98. The downward movement of slide plate 56 correspondingly moves heat exchanger assembly 16 (i.e., coupling manifold 44, coolant tube 46, chill block holder 48, and chill block 50) downward in the same direction (represented by arrow 102). This correspondingly moves blade 20 and insulator mount 36 downward along longitudinal axis 21 in the direction of arrow 96.

The downward movement of blade 20 and insulator mount 36 causes successive portions of brazing alloy 84 to lower into the localized heating region of induction coil 38. This melts the successive portions of brazing alloy 84, thereby allowing the melted successive portions to conform to the dimensions of mold cavity 82 (shown in FIG. 2). As the melted portions move below the localized heating region of induction coil 38, the near-linear thermal gradient along blade 20 correspondingly causes the melted successive portions to fuse to the tip of blade 20 and directionally solidify along longitudinal axis 21.

FIG. 4 shows system 10 after the induction brazing process is complete, where system 10 is disposed in a lowered position such that blade 20 is disposed below induction coil 38. As shown, after the induction brazing process, blade 20 includes restored tip 104, which is formed from the directionally-solidified brazing alloy 84 (shown in FIG. 2). Accordingly, restored tip 104 desirably exhibits a directionally-solidified microstructure, which is desirably similar to a single crystal microstructure, and substantially preserves the high mechanical strengths and creep resistances of the base alloy of blade 20. After the induction brazing process is complete, cover portion 24 may be removed from bottom platform 26, and restored blade 20 may be removed. Restored blade 20 may then undergo post-brazing operations, such as machining and smoothing processes, to obtain the original dimensions of blade 20.

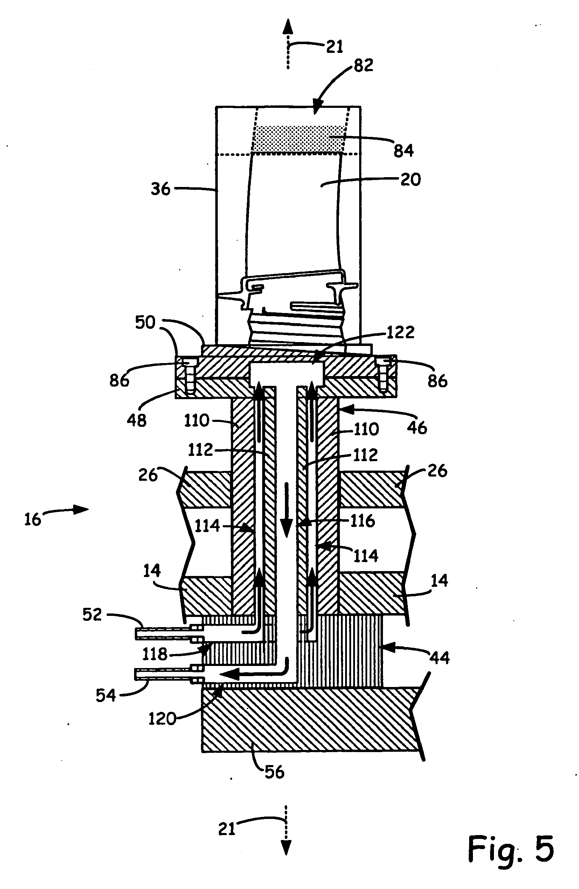

FIG. 5 is an expanded view of heat exchanger assembly 16 in use with blade 20 and radiation insulator 36, where heat exchanger assembly 16 is shown in section. As shown, coolant tube 46 includes exterior wall 110 and interior wall 112, each of which are annular walls that define outer channel 114 and inner channel 116. Outer channel 114 and inner channel 116 are coaxial fluid conduits for the coolant fluid to flow through. Exterior wall 110 and interior wall 112 are desirably formed from thermally-insulative materials or include thermally-insulative coatings to reduce thermal transfers from outer channel 114 and inner channel 116. Examples of suitable materials for exterior wall 110 and interior wall 112 include polymeric materials having low thermal conductivities, such as fluoropolymers commercially available under the trademark "TEFLON" from E.I. du Pont de Nemours and Company, Wilmington, DE. Bottom platform 26 also desirably includes a seal mechanism (not shown) with outer wall 110 that allows interior region 42 to remain sealed off from the external environment, while also allowing coolant tube 46 to move upward and downward along longitudinal axis 21.

Coupling manifold 44 also includes inlet pathway 118 and outlet pathway 120, where inlet pathway 118 interconnects inlet port 52 and outer channel 114, and outlet pathway 120 interconnects outlet port 54 and inner channel 116. On the top end of coolant tube 46, chill block holder 48 and chill block 50 define cavity 122 when secured together with screws 86. As shown, cavity 122 connects with outer channel 114 and inner channel 116 at the opposing ends from coupling manifold 44. This arrangement of heat exchanger assembly 16 allows the coolant fluid to flow from inlet port 52, through inlet pathway 118 and outer channel 114, to cavity 122. The coolant fluid in cavity 122 draws heat from chill block 50, which correspondingly forms the thermal gradient along blade 20 due to the conductive contact between blade 20 and chill block 50. As discussed above, the thermal gradient increases the ability to obtain a directionally-solidified microstructure from brazing alloy 84, and also substantially preserves the mechanical properties of the base alloy of blade 20.

After entering cavity 122 and drawing a portion of the heat from chill block 50, the coolant fluid then flows down through inner channel 116 and outlet pathway 120, and exits coupling manifold 44 via outlet port 54. The outgoing coolant fluid desirably flows to an external refrigeration system (not shown) that is connected to inlet port 52 and outlet port 54 for providing a coolant loop. If desired, the power requirements of the external refrigeration system may be monitored to determine the brazing temperature of blade 20 and brazing alloy 84 during the induction brazing process. In this embodiment, the thermal profile along blade 20 is measured prior to performing the induction brazing process to determine the heat transfer coefficient between the tip of blade 20 and cavity 122. Based on the predetermined heat transfer coefficient, and the power requirements of the external refrigeration system for continuously cooling the coolant fluid, the brazing temperature may be continuously monitored during the induction brazing process. This allows the electrical current applied to induction coil 38 (shown in FIGS 1-4) to be adjusted (manually or in an automated manner with a process control loop) to maintain a desired brazing temperature.

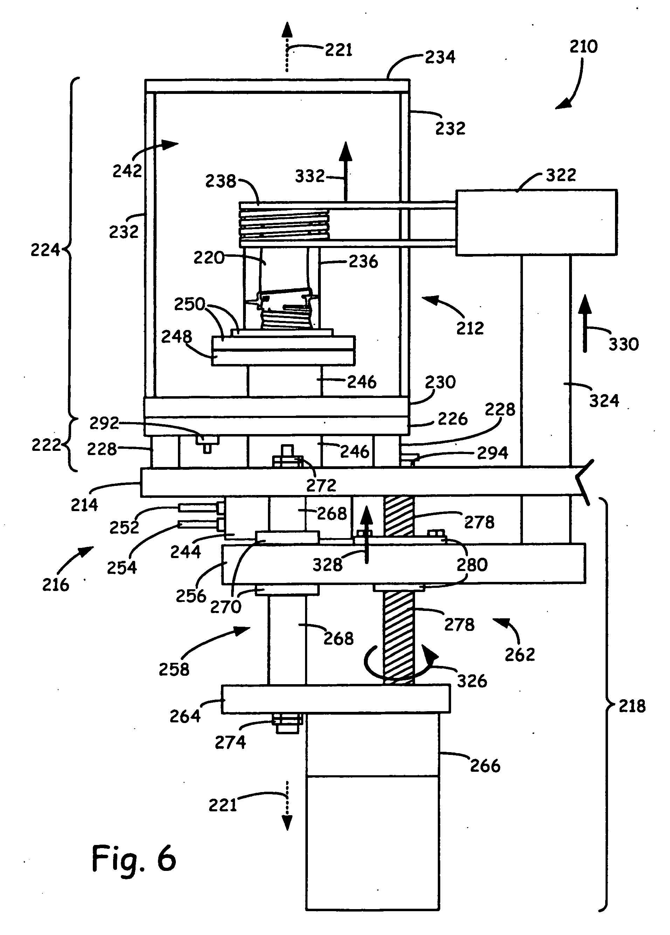

FIG. 6 is a side view of system 210, which is an alternative embodiment to system 10 (shown in FIGS. 1-5), where reference labels of corresponding components are increased by "200". As shown in FIG. 6, motor assembly 218 is configured to move induction coil 238 upward along longitudinal axis 221 relative to metal component 220 and radiation insulator 236. In this embodiment, coupling manifold 244 is secured to the bottom of support plate 214 such that heat exchanger assembly 216 is not supported by slide plate 256. Thus, heat exchanger assembly 216, metal component 220, and radiation insulator 236 desirably do not move in this embodiment.

As further shown, system 210 includes power source 322 and support shaft 324, where power source 322 is connected to induction coil 238 for providing an electrical current to induction coil 328. Support shaft 324 is a shaft that interconnects slide plate 256 and power source 322, thereby allowing motion assembly 218 to move induction coil 228 and power source 322 along longitudinal axis 221 in a similar manner to motion assembly 18 (shown in FIGS. 1-4). Accordingly, during an induction brazing operation, motion assembly 218 moves induction coil 228 and power source 322 upward along longitudinal axis 221 with motor 266.

Motor 266 applies rotational power to threaded screw 278, which causes threaded screw 278 to rotate in a first rotational direction (represented by arrow 326). The threaded engagement between threaded screw 278 and screw nut 280 causes slide plate 256 to move upward, where linear bearing assembly 258 and linear bearing assembly 260 (not shown) restrict the upward movement of slide plate 256 to a linear direction along longitudinal axis 221 (represented by arrow 328). In an alternative embodiment, threaded screw 278 and screw nut 280 are configured to move slide plate 256 upward when threaded screw 278 is rotated in an opposite rotational direction from the rotation direction of arrow 326. The upward movement of slide plate 256 correspondingly moves support shaft 324 and power source 322 upward in the same direction (represent by arrow 330). This correspondingly moves induction coil 238 upward along longitudinal axis 21 (represented by arrow 332). Chamber wall 232 desirably provides a seal mechanism that allows interior region 242 to remain sealed off from the external environment, while also allowing induction coil 238 to move upward and downward along longitudinal axis 221. For example, chamber wall 232 may include one or more accordion baffle portions (not shown) that expand and contract with the movement of induction coil 238.

The upward movement of induction coil 238 causes the localized heating region of induction coil 238 to move upward into successive portions of brazing alloy 284 (not shown). This melts the successive portions of brazing alloy 284, thereby allowing the melted successive portions to conform to the dimensions of mold cavity 282 (not shown). As the melted portions fall below the localized heating region of induction coil 238, the near-linear thermal gradient along blade 220 correspondingly causes the melted successive portions to fuse to the tip of blade 220 and directionally solidify along longitudinal axis 221 in the same manner as discussed above for blade 20. Accordingly, the motion assemblies (e.g., motion assemblies 18 and 218) are configured to cause relative movements between the metal component (e.g., blades 20 and 220) and the induction coils (e.g., induction coils 38 and 238). In the embodiment shown in FIGS. 1-4, motion assembly 18 moves blade 20 downward along longitudinal axis 21 relative to induction coil 38, and in the embodiment shown in FIG. 6, motion assembly 218 moves induction coil 238 upward longitudinal axis 221 relative to blade 220.

Although the present invention has been described with reference to preferred embodiments, workers skilled in the art will recognize that changes may be made in form and detail without departing from the scope of the invention as defined by the appended claims.

## Claims

1. A system for restoring a metal turbine blade or vane with a brazing alloy, the system comprising:
an induction coil (38) configured to extend around a portion of the metal blade or vane (20) and at least a portion of a brazing alloy (84) disposed on the metal blade or vane (20);
a motion assembly (18, 218) configured to cause relative movement between the metal blade or vane (20) and the induction coil (38) along a first axis (21); and
a heat exchanger assembly (16) configured to form a thermal gradient along the metal blade or vane (20) in a direction along the first axis (21); **characterised in that** the system further comprises:
a chamber (12) having an interior region (42); and the induction coil (38) being at least partially disposed within the interior region (42)
a radiation insulator (36) configured to reduce thermal radiation emitted from the metal blade or vane (20) and comprising a mold cavity (82) for retaining the brazing alloy (84).

2. The system of claim 1, wherein the mold cavity (82) is configured to conform to the desired dimensions of a restored tip of the blade (20).

3. The system of claim 1 or 2, wherein the interior region (42) is configured to maintain a vacuum.

4. The system of claim 1, 2 or 3, wherein the heat exchanger assembly (16) comprises:
a coupling manifold (44) configured to receive and output a coolant fluid; and
a coolant tube (46) having a first end secured to the coupling manifold (44), and comprising a first fluid channel (114) and a second fluid channel (116) for the coolant fluid.

5. The system of claim 4, wherein the heat exchanger assembly (16) further comprises:
a first thermally-conductive component (48) secured to a second end of the coolant tube (46); and
a second thermally-conductive component (50) removably securable to the first thermally-conductive component (48), the second thermally-conductive component (50) being configured to retain the metal blade or vane (20).

6. The system of claim 1, wherein the heat exchanger assembly (16) comprises
a thermally-conductive component (50) disposed in the interior region (42) for retaining the metal blade or vane (20), wherein the thermally-conductive component (50) is in conductive contact with the metal blade or vane (20), and wherein the induction coil (38) and the thermally-conductive component (50) are offset along a first axis (21); and wherein the motion assembly (18, 218) comprises
a threaded-screw drive mechanism (62, 262) configured to cause relative movement between the metal blade or vane (20) and the induction coil (38) along said first axis (21), the system further comprising
at least one fluid conduit (114, 116) connected to the thermally-conductive component (50) for supplying a coolant fluid to the thermally-conductive component (50); and

7. The system of any preceding claim, wherein the motion assembly or threaded-screw drive mechanism (62) is configured to move the metal blade or vane (20) along the first axis (21) relative to the induction coil (38) or is configured to move the induction coil (238) along the first axis (221) relative to the metal blade or vane (220).

8. The system of any preceding claim, wherein the motion assembly or threaded-screw drive mechanism (62 or 262) comprises:
a plate (56) operably supporting at least one of the heat exchanger assembly (16) and the induction coil (38); or a plate (56), wherein at least a portion of the at least one fluid conduit (114 and 116) is supported by the plate (56);
at least one linear bearing assembly (58 and 60) operably connected to the plate (56) for restricting movement of the plate (56) to directions along the first axis (21);
a screw nut (80) secured through the plate (56);
a threaded screw (78) threadedly engaged with the screw nut (80) for moving the plate (56) based on a rotation of the threaded screw (78); and
a motor (66) secured to the threaded screw (78) and configured to apply rotational power to the threaded screw (78).

9. The system of any preceding claim, wherein the brazing alloy (84) is provided as a powder having nanosize or mircosize particles, and preferably the nanoparticle alloy (84) comprises nickel-based alloys, nickel-based superalloys, cobalt-based alloys, cobalt-based superalloys and combinations thereof.

10. A method for restoring a metal turbine blade or vane with a brazing alloy, the method comprising:
forming a thermal gradient along the metal blade or vane (20), wherein the thermal gradient extends along a first axis (21);
causing relative movement between the metal blade or vane (20) and an induction coil (38) in a direction along the first axis (21),
inductively heating successive portions of the brazing alloy (84) with the induction coil (38) while causing the relative movement between the metal blade or vane (20) and the induction coil (38), thereby allowing the melted successive portions of the brazing alloy (84) to directionally solidify to the metal blade or vane (20) along the first axis (21); and **characterised by**:
restricting the emission of thermal radiation from the metal blade or vane (20) and the brazing alloy (84) using a radiation insulator (36) while inductively heating the successive portions of the brazing alloy (84), and retaining the brazing alloy (84) in a mold cavity (82) of said radiation insulator (36).

11. The method of claim 10, wherein the mold cavity (82) is configured to conform to the desired dimensions of a restored tip of the blade (20).

12. The method of claim 10 or 11, further comprising maintaining a vacuum around the metal blade or vane (20) and the brazing alloy (84) while inductively heating the successive portions of the brazing alloy (84).

13. The method of claim 10, 11 or 12, wherein forming the thermal gradient along the metal blade or vane (20) comprises cooling a first portion of the metal blade or vane (20) and heating a second portion of the metal blade or vane (20), wherein the first and second portions of the metal blade or vane (20) are offset along the first axis (21).

14. The method of any of claims 10 to 13, wherein causing the relative movement between the metal blade or vane (20) and the induction coil (38) comprises rotating a threaded screw (78) that is engaged with a threaded nut (80), wherein the threaded nut (80) is secured to a plate (56) that operably supports at least one of the metal blade or vane (20) and the induction coil (38).

15. The method of any of claims 10 to 14, wherein the relative movement is performed at a movement rate that substantially corresponds to a growth rate of the solidified brazing alloy (84).

## Patentansprüche

1. System zum Überholen einer Turbinenlaufschaufel oder Turbinenleitschaufel aus Metall mit einem Hartlot, wobei das System umfasst:
eine Induktionsspule (38), die derart ausgebildet ist, dass sie sich um einen Bereich der Metall-Laufschaufel oder Metall-Leitschaufel (20) und um zumindest einen Teil eines Hartlots (84), das auf der Metall-Laufschaufel oder Metall-Leitschaufel (20) angeordnet ist, erstreckt;
eine Bewegungsanordnung (18, 218), die derart ausgebildet ist, dass sie eine relative Bewegung zwischen der Metall-Laufschaufel oder Metall-Leitschaufel (20) und der Induktionsspule (38) entlang einer ersten Achse (21) bewirkt ; und
eine Wärmetauscheranordnung (16), die derart ausgebildet ist, dass sie einen thermischen Gradienten entlang der Metall-Laufschaufel oder Metall-Leitschaufel (20) in eine Richtung entlang der ersten Achse (21) ausbildet;
**dadurch gekennzeichnet, dass** das System des Weiteren umfasst:
eine Kammer (12), die einen inneren Bereich (42) aufweist; und wobei die Induktionsspule (38) zumindest teilweise innerhalb des inneren Bereichs (42) angeordnet ist,
einen Strahlungsisolator (36), der derart ausgebildet ist, dass er von der Metall-Laufschaufel oder Metall-Leitschaufel (20) emittierte thermische Strahlung reduziert, und der eine Formaussparung (82) zum Halten des Hartlots (84) umfasst.

2. System nach Anspruch 1, wobei die Formaussparung (82) derart ausgebildet ist, dass sie einer gewünschten Abmessung einer überholten Spitze der Schaufel (20) entspricht.

3. System nach Anspruch 1 oder 2, wobei der innere Bereich (42) derart ausgebildet ist, dass er ein Vakuum aufrechterhält.

4. System nach Anspruch 1, 2 oder 3, wobei die Wärmetauscheranordnung (16) umfasst:
einen Kopplungsverteiler (44), der derart ausgebildet ist, dass er ein Kühlmittelfluid aufnimmt und ablässt; und
eine Kühlmittelleitung (46), die ein erstes Ende aufweist, das an dem Kopplungsverteiler (44) befestigt ist, und die einen ersten Fluidkanal (114) und einen zweiten Fluidkanal (116) für das Kühlmittelfluid umfasst.

5. System nach Anspruch 4, wobei die Wärmetauscheranordnung (16) des Weiteren umfasst:
eine erste thermisch-leitende Komponente (48), die an einem zweiten Ende der Kühlmittelleitung (46) befestigt ist; und
eine zweite thermisch-leitende Komponent (50), die entfernbar an der ersten thermisch-leitenden Komponente (48) befestigbar ist, wobei die zweite thermisch-leitende Komponente (50) derart ausgebildet ist, dass sie die Metall-Laufschaufel oder Metall-Leitschaufel (20) hält.

6. System nach Anspruch 1, wobei die Wärmetauscheranordnung (16) umfasst:
eine thermisch-leitende Komponente (50), die in dem inneren Bereich (42) zum Halten der Metall-Laufschaufel oder Metall-Leitschaufel (20) angeordnet ist, wobei die thermisch-leitende Komponente (50) in leitendem Kontakt mit der Metall-Laufschaufel oder Metall-Leitschaufel (20) ist, und wobei die Induktionsspule (38) und die thermisch-leitende Komponente (50) entlang einer ersten Achse (21) versetzt sind; und wobei die Bewegungsanordnung (18, 218) umfasst:
einen Gewindespindelantrieb-Mechanismus (62, 262), der derart ausgebildet ist, dass er eine relative Bewegung zwischen der Metall-Laufschaufel oder Metall-Leitschaufel (20) und der Induktionsspule (38) entlang der ersten Achse (21) bewirkt, wobei das System des Weiteren umfasst
zumindest eine Fluidleitung (114, 116), die mit der thermisch-leitenden Komponente (50) zum Zuführen eines Kühlmittelfluids an die thermisch-leitende Komponente (50) verbunden ist.

7. System nach einem der vorangehenden Ansprüche, wobei die Bewegungsanordnung oder der Gewindespindelantrieb-Mechanismus (62) dazu ausgebildet ist, die Metall-Laufschaufel oder Metall-Leitschaufel (20) entlang der ersten Achse (21) relativ zu der Induktionsspule (38) zu bewegen oder dazu ausgebildet ist, die Induktionsspule (238) entlang der ersten Achse (221) relativ zu der Metall-Laufschaufel oder Metall-Leitschaufel (220) zu bewegen.

8. System nach einem der vorangehenden Ansprüche, wobei die Bewegungsanordnung oder der Gewindespindelantrieb-Mechanismus (62 oder 262) umfasst:
eine Platte (56), die betriebsmäßig zumindest eines der Wärmetauscheranordnung (16) und der Induktionsspule (38) stützt; oder eine Platte (56), wobei zumindest ein Bereich der zumindest einen Fluidleitung (114 und 116) von der Platte (56) gestützt ist;
zumindest eine lineare Lageranordnung (58 und 60), die betriebsmäßig mit der Platte (56) verbunden sind zum Begrenzen von Bewegung der Platte (56) in Richtungen entlang der ersten Achse (21);
eine Spindelmutter (80), die über die Platte (56) befestigt ist;
eine Gewindespindel (78), die gewindemäßig mit der Spindelmutter (80) im Eingriff steht zum Bewegen der Platte (56) basierend auf einer Rotation der Gewindespindel (78); und
einen Motor (66), der an der Gewindespindel (78) befestigt ist und dazu ausgebildet ist Rotationsleistung auf die Gewindespindel (78) aufzubringen.

9. System nach einem der vorangehenden Ansprüche, wobei das Hartlot (84) als ein Pulver bereitgestellt ist, das nanogroße oder mikrogroße Partikel aufweist, und wobei die Nanopartikellegierung (84) vorzugsweise Nickel-basierende Legierungen, Nickel-basierende Superlegierungen, Kobalt-basierende Legierungen, Kobalt-basierende Superlegierungen und Kombinationen dieser umfasst.

10. Verfahren zum Überholen einer Turbinenlaufschaufel oder Turbinenleitschaufel aus Metall mit einem Hartlot, wobei das Verfahren umfasst:
Ausbilden eines thermischen Gradienten entlang der Metall-Laufschaufel oder Metall-Leitschaufel (20), wobei sich der thermische Gradient entlang einer ersten Achse (21) erstreckt;
Bewirken relativer Bewegung zwischen der Metall-Laufschaufel oder Metall-Leitschaufel (20) und einer Induktionsspule (38) in einer Richtung entlang der ersten Achse (21),
induktives Erwärmen aufeinanderfolgender Bereiche des Hartlots (84) mit der Induktionsspule (38) während des Bewirkens der relativen Bewegung zwischen der Metall-Laufschaufel oder Metall-Leitschaufel (20) und der Induktionsspule (38), wodurch es den geschmolzenen aufeinanderfolgenden Bereichen des Hartlots (84) erlaubt ist, richtungsabhängig hin zu der Metall-Laufschaufel oder Metall-Leitschaufel (20) entlang der ersten Achse (21) zu erhärten; und **gekennzeichnet durch**:
Begrenzen der Emission von thermischer Strahlung von der Metall-Laufschaufel oder Metall-Leitschaufel und dem Hartlot (84) **durch** Verwenden eines Strahlungsisolators (36) während des induktiven Erwärmens der aufeinanderfolgenden Bereiche des Hartlots (84), und Halten des Hartlots (84) in einer Formaussparung (82) des Strahlungsisolators (36).

11. Verfahren nach Anspruch 10, wobei die Formaussparung (82) derart ausgebildet ist, dass sie einer gewünschten Abmessung einer überholten Spitze der Schaufel (20) entspricht.

12. Verfahren nach Anspruch 10 oder 11, des Weiteren umfassend Aufrechterhalten eines Vakuums um die Metall-Laufschaufel oder Metall-Leitschaufel (20) und das Hartlot (84) während des induktiven Erwärmens der aufeinanderfolgenden Bereiche des Hartlots (84).

13. Verfahren nach Anspruch 10, 11 oder 12, wobei das Ausbilden des thermischen Gradienten entlang der Metall-Laufschaufel oder Metall-Leitschaufel (20) Kühlen eines ersten Bereichs der Metall-Laufschaufel oder Metall-Leitschaufel (20) und Erwärmen eines zweiten Bereichs der Metall-Laufschaufel oder Metall-Leitschaufel (20) umfasst, wobei der erste und der zweite Bereich der Metall-Laufschaufel oder Metall-Leitschaufel (20) entlang der ersten Achse (21) versetzt sind.

14. Verfahren nach einem der Ansprüche 10 bis 13, wobei das Bewirken der relativen Bewegung zwischen der Metall-Laufschaufel oder Metall-Leitschaufel (20) und der Induktionsspule (38) Rotieren einer Gewindespindel (78) umfasst, die mit einer Gewindemutter (80) im Eingriff steht, wobei die Gewindemutter (80) an einer Platte (56) befestigt ist, die betriebsmäßig zumindest eine der Metall-Laufschaufel oder Metall-Leitschaufel (20) und der Induktionsspule (38) stützt.

15. Verfahren nach einem der Ansprüche 10 bis 14, wobei die relative Bewegung bei einer Bewegungsrate durchgeführt wird, die im Wesentlichen einer Wachstumsrate des gehärteten Hartlots (84) entspricht.

## Revendications

1. Système pour restaurer une pale ou ailette de turbine métallique avec un alliage de brasage, le système comprenant :
une bobine d'induction (38) configurée de manière à s'étendre autour d'une portion de la pale ou ailette métallique (20) et au moins une portion d'un alliage de brasage (84) disposé sur la pale ou ailette métallique (20) ;
un ensemble moteur (18, 218) configuré pour causer un mouvement relatif entre la pale ou ailette métallique (20) et la bobine d'induction (38) le long d'un premier axe (21) ; et
un ensemble d'échangeur de chaleur (16) configuré pour former un gradient thermique le long de la pale ou ailette métallique (20) dans une direction le long du premier axe (21) ;
**caractérisé en ce que** le système comprend en outre
une chambre (12) ayant une région intérieure (42) ; et la bobine d'induction (38) étant au moins en partie disposée dans la région intérieure (42),
un isolateur au rayonnement (36) configuré pour réduire le rayonnement thermique émis depuis la pale ou ailette métallique (20) et comprenant une cavité de moule (82) pour retenir l'alliage de brasage (84).

2. Système selon la revendication 1, dans lequel la cavité de moule (82) est configurée de manière à se conformer aux dimensions souhaitées d'une pointe restaurée de la pale (20).

3. Système selon la revendication 1 ou 2, dans lequel la région intérieure (42) est configurée pour maintenir un vide.

4. Système selon la revendication 1, 2 ou 3, dans lequel l'ensemble d'échangeur de chaleur (16) comprend :
un collecteur d'accouplement (44) configuré pour recevoir et fournir un fluide réfrigérant ; et
un tube de réfrigérant (46) ayant une première extrémité fixée au collecteur d'accouplement (44), et comprenant un premier canal de fluide (114) et un deuxième canal de fluide (16) pour le fluide réfrigérant.

5. Système selon la revendication 4, dans lequel l'ensemble d'échangeur de chaleur (16) comprend en outre :
un premier composant thermoconducteur (48) fixé à une deuxième extrémité du tube de réfrigérant (46) ; et
un deuxième composant thermoconducteur (50) pouvant être fixé de manière amovible au premier composant thermoconducteur (48), le deuxième composant thermoconducteur (50) étant configuré pour retenir la pale ou ailette métallique (20).

6. Système selon la revendication 1, dans lequel l'ensemble d'échangeur de chaleur (16) comprend un composant thermoconducteur (50) disposé dans la région intérieure (42) pour retenir la pale ou ailette métallique (20), le composant thermoconducteur (50) étant en contact conducteur avec la pale ou ailette métallique (20), et la bobine d'induction (38) et le composant thermoconducteur (50) étant décalés le long d'un premier axe (21) ; et l'ensemble moteur (18, 218) comprenant
un mécanisme d'entraînement à vis filetée (62, 262) configuré pour provoquer un mouvement relatif entre la pale ou ailette métallique (20) et la bobine d'induction (38) le long dudit premier axe (21), le système comprenant en outre au moins un conduit fluidique (114, 116) connecté au composant thermoconducteur (50) en vue de fournir un fluide réfrigérant au composant thermoconducteur (50).

7. Système selon l'une quelconque des revendications précédentes, dans lequel l'ensemble moteur ou le mécanisme d'entraînement à vis filetée (62) est configuré pour déplacer la pale ou ailette métallique (20) le long du premier axe (21) par rapport à la bobine d'induction (38) ou est configuré pour déplacer la bobine d'induction (238) le long du premier axe (221) par rapport à la pale ou ailette métallique (220).

8. Système selon l'une quelconque des revendications précédentes, dans lequel l'ensemble moteur ou le mécanisme d'entraînement à vis filetée (62 ou 262) comprend :
une plaque (56) supportant de manière fonctionnelle au moins l'un de l'ensemble d'échangeur de chaleur (16) et de la bobine d'induction (38) ; ou une plaque (56), au moins une portion de l'au moins un conduit fluidique (114 et 116) étant supportée par la plaque (56) ;
au moins un ensemble de palier linéaire (58 et 60) connecté fonctionnellement à la plaque (56) pour limiter le mouvement de la plaque (56) dans des directions le long du premier axe (21) ;
un écrou fileté (80) fixé à travers la plaque (56) une vis filetée (78) engagée par filetage avec l'écrou fileté (80) pour déplacer la plaque (56) sur la base d'une rotation de la vis filetée (78) ; et
un moteur (66) fixé à la vis filetée (78) et configuré pour appliquer une puissance de rotation à la vis filetée (78).

9. Système selon l'une quelconque des revendications précédentes, dans lequel l'alliage de brasage (84) est prévu sous la forme d'une poudre ayant des particules de taille nano ou micro, et l'alliage de nanoparticules (84) comprend de préférence des alliages à base de nickel, des superalliages à base de nickel, des alliages à base de cobalt, des superalliages à base de cobalt et des combinaisons de ceux-ci.

10. Procédé pour restaurer une pale ou ailette de turbine métallique avec un alliage de brasage, le procédé comprenant :
la formation d'un gradient thermique le long de la pale ou ailette métallique (20), le gradient thermique s'étendant le long d'un premier axe (21) ;
la génération d'un mouvement relatif entre la pale ou ailette métallique (20) et une bobine d'induction (38) dans une direction le long du premier axe (21) ;
le chauffage par induction de portions successives de l'alliage de brasage (84) avec la bobine d'induction (38) tout en causant le mouvement relatif entre la pale ou ailette métallique (20) et la bobine d'induction (38), en permettant ainsi aux portions successives en fusion de l'alliage de brasage (84) de se solidifier directionnellement à la pale ou ailette métallique (20) le long du premier axe (21) ; et **caractérisé par** :
la limitation de l'émission de rayonnement thermique depuis la pale ou ailette métallique (20) et l'alliage de brasage (84) en utilisant un isolateur au rayonnement (36) tout en chauffant par induction les portions successives de l'alliage de brasage (84), et en retenant l'alliage de brasage (84) dans une cavité de moule (82) dudit isolateur au rayonnement (36).

11. Procédé selon la revendication 10, dans lequel la cavité de moule (82) est configurée pour s'adapter aux dimensions souhaitées d'une pointe restaurée de la pale (20).

12. Procédé selon la revendication 10 ou 11, comprenant en outre le maintien d'un vide autour de la pale ou ailette métallique (20) et l'alliage de brasage (84) tout en chauffant par induction les portions successives de l'alliage de brasage (84).

13. Procédé selon la revendication 10, 11 ou 12, dans lequel la formation du gradient thermique le long de la pale ou ailette métallique (20) comprend le refroidissement d'une première portion de la pale ou ailette métallique (20) et le chauffage d'une deuxième portion de la pale ou ailette métallique (20), les première et deuxième portions de la pale ou ailette métallique (20) étant décalées le long du premier axe (21).

14. Procédé selon l'une quelconque des revendications 10 à 13, dans lequel la génération d'un mouvement relatif entre la pale ou ailette métallique (20) et la bobine d'induction (38) comprend la rotation d'une vis filetée (78) qui est engagée avec un écrou fileté (80), l'écrou fileté (80) étant fixé à une plaque (56) qui supporte fonctionnellement au moins l'une de la pale ou ailette métallique (20) et de la bobine d'induction (38).

15. Procédé selon l'une quelconque des revendications 10 à 14, dans lequel le mouvement relatif est effectué à une vitesse de mouvement qui correspond substantiellement à une vitesse de croissance de l'alliage de brasage solidifié (84).
